# EUROPÄISCHE PATENTSCHRIFT

(11) **EP 2 087 319 B1**
(45) Veröffentlichungstag und Bekanntmachung des Hinweises auf die Patenterteilung: **11.03.2015**
(21) Anmeldenummer: 07822635.4
(22) Anmeldetag: 15.11.2007
(51) Int. Cl.: G01D 21/00, G05B 19/042, G01D 21/02

(54) **VORRICHTUNG MIT EINER MODULAR AUFGEBAUTEN MESSWANDLERSCHALTUNG**
DEVICE COMPRISING A MODULAR TRANSDUCER CIRCUIT
DISPOSITIF PRÉSENTANT UN CIRCUIT TRANSDUCTEUR À STRUCTURE MODULAIRE

(30) Priorität: 16.11.2006 DE 102006054421; 06.12.2006 DE 202006018584 U
(43) Veröffentlichungstag der Anmeldung: 12.08.2009
(73) Patentinhaber: Endress+Hauser GmbH+Co. KG, 79689 Maulburg (DE)
(72) Erfinder: PHILIPPS, Michael, 79539 Lörrach (DE)
(74) Vertreter: Andres, Angelika Maria
(86) Internationale Anmeldenummer: PCT/EP2007/062395
(87) Internationale Veröffentlichungsnummer: WO 2008/059019

(56) Entgegenhaltungen:
- EP-A- 1 901 145
- JP-A- 10 253 392
- US-A1- 2006 170 410

## Beschreibung

Die Erfindung bezieht sich auf eine Vorrichtung mit einer modular aufgebauten Messwandlerschaltung gemäß den Oberbegriff des Anspruchs 1.

In der industriellen Messtechnik, insb. in der Automatisierungs- und Prozesssteuerungstechnik, werden regelmäßig Vorrichtungen eingesetzt, die im Prozessablauf mittels Sensoren Prozessvariablen messen oder mittels Aktoren Regelgrößen steuern. Die entsprechenden Vorrichtungen ermitteln beispielsweise den Druck, den Durchfluss, den Füllstand, die Dielektrizitätskonstante, die Grenzschicht, die Temperatur oder eine andersartige physikalische und/oder chemische Prozessgröße als eine Prozessvariable in einem Prozessablauf. Von der Anmelderin werden beispielsweise solche Vorrichtungen als Feldgeräte unter dem Namen Cerabar, Deltabar, Deltapilot, Promass, Levelflex, Micropilot, Prosonic, Soliphant, Liquiphant, Easytemp produziert und vertrieben, die vorwiegend dazu bestimmt sind, zumindest eine der oben bezeichneten Prozessvariablen eines Mediums in einem Behälter zu bestimmen und/oder zu überwachen.

Eine Gemeinsamkeit aller der oben erwähnten Vorrichtungen bzw. Feldgeräte ist, dass aus den durch die Sensoren ermittelten Prozessgrößen mittels einer nachgeschalteten Elektronik ein Messwert ermittelt und ausgewertet wird. Diese Elektronik ist meist auf die entsprechenden Messanforderungen und zu messende Prozessgröße so angepasst, dass für jedes Sensorprinzip, für jede zu messende Prozessgröße und für jede Messperformance eine eigenständige Elektronik entwickelt werden muss. Die sensornahe Signalverarbeitung ist meist als ASIC (Anwendungsspezifische Integrierte Schaltung) ausgestaltet, die oft in großen Stückzahlen hergestellt wird. Eine andere Lösung besteht z.B. darin, Feldgeräte mit unterschiedlichen Messgenauigkeitsstandards, mit einer einheitlichen Elektronik und mit einer maximalen Messperformance auszustatten und die einzelnen Funktionalitäten z.B. per Software zu aktivieren oder zu deaktivieren.

Nachteilig an diesen Elektroniken ist, dass sich die Kosten für die Elektronik nicht proportional zu der geforderten Messperformance verhalten und keine Modularität gegeben ist.

Die Aufgabe der Erfindung ist es, eine Vorrichtung aufzuzeigen, deren Messperformance und Funktionalität sich entsprechend den Anforderungen einfach anpassen lässt und die kostengünstig umzusetzen ist.

Diese Aufgabe wird durch eine Vorrichtung mit zumindest einem Sensor zum Erfassen wenigstens einer chemischen und/oder physikalischen Prozessgröße und mit zumindest einer modular aufgebauten Messwandlerschaltung, welcher zumindest eine Sensoreinheit, die aus der vom Sensor erfassten Prozessgröße eine elektrische Messgröße ermittelt und den Sensor mit der notwendigen Energie versorgt, und zumindest einer anwendungsspezifischen Signalverarbeitungseinheit zur Ermittlung eines Messwerts aus der elektrischen Messgröße, umfasst, wobei die Übertragung eines konditionierten Ausgangssignals zwischen der Sensoreinheit und der anwendungsspezifischen Signalverarbeitungseinheit vorgesehen ist, wobei die anwendungsspezifische Signalverarbeitungseinheit austauschbar ausgestaltet ist, und wobei in Abhängigkeit von einer vorgebbaren Messgenauigkeit des Messwerts zumindest eine von mehreren unterschiedlichen Arten von anwendungsspezifischen Signalverarbeitungseinheiten einsetzbar ist. Aus JP-1025392 ist eine solche Vorrichtung zur Bewegungsmessung eines Gegenstandes bekannt, in der modulare Signalverarbeitungseinheiten anwendungsspezifisch austauschbar sind, je nach erwünschten Genauigkeit und Auflösung.

Bei einer bevorzugten Ausgestaltung der erfindungsgemäßen Vorrichtung ist der Signalverarbeitungseinheit eine Regel-/Auswerteeinheit nachgeschaltet ist, die zur Auswertung und Weiterverarbeitung des Messwerts, sowie zur Steuerung und Regelung der Vorrichtung vorgesehen.

Eine vorteilhafte Ausführungsform der erfindungsgemäßen Vorrichtung sieht vor, dass eine erste Art der anwendungsspezifischen Signalverarbeitungseinheit für Anwendungen mit einer niedrigen Anforderung an die Messgenauigkeit vorgesehen ist.

Eine weitere vorteilhafte Ausgestaltung der erfindungsgemäßen Vorrichtung sieht eine zweite Art der anwendungsspezifischen Signalverarbeitungseinheit für Anwendungen mit einer mittleren Anforderung an die Messgenauigkeit vor.

In einer weiteren vorteilhaften Ausgestaltung der erfindungsgemäßen Vorrichtung ist eine dritte Art der anwendungsspezifischen Signalverarbeitungseinheit für Anwendungen mit einer hohen Anforderung an die Messgenauigkeit vorgesehen.

Bei einer bevorzugten Ausführungsform der erfindungsgemäßen Vorrichtung wird davon ausgegangen, dass die erste Art der anwendungsspezifischen Signalverarbeitungseinheit zumindest eine Tiefpass-Schaltung umfasst.

Eine weitere bevorzugte Ausführungsform der Vorrichtung nach der Erfindung sieht vor, dass die Tiefpass-Schaltung einen zur elektrischen Messgröße proportionalen Messwert als ein analoges Stromsignal oder eine analoges Spannungssignal bereitstellt.

Eine ergänzende Ausführungsform der erfindungsgemäßen Vorrichtung erlaubt, dass die zweite Art der anwendungsspezifischen Signalverarbeitungseinheit zumindest eine Zähler-Schaltung umfasst.

Bei einer bevorzugten Ausführungsform der erfindungsgemäßen Vorrichtung umfasst die dritte Art der anwendungsspezifischen Signalverarbeitungseinheit zumindest eine Analog-Digital-Wandler-Schaltung.

Weitere bevorzugte Ausführungsformen der erfindungsgemäßen Vorrichtung berücksichtigen, dass die Zähler-Schaltung und/oder die Analog-Digital-Wandler-Schaltung einen zur elektrischen Messgröße proportionalen Messwert als ein Digitalsignal bereitstellen.

In einer anderen bevorzugten Ausführungsform der erfindungsgemäßen Vorrichtung ist zumindest die erste Art, die zweite Art und/oder die dritte Art der anwendungsspezifischen Signalverarbeitungseinheit fest in der Messwandlerschaltung integriert.

Eine Ausgestaltung der erfindungsgemäßen Vorrichtung sieht dazu vor, dass in der Messwandlerschaltung zumindest ein Steckplatz zum modularen Austauschen der unterschiedlichen Arten von der anwendungsspezifischen Signalverarbeitungseinheit vorgesehen ist.

Bei einer weiteren Ausführungsform der Erfindung ist ein Schaltelement an dem Steckplatz vorgesehen.

Eine andere bevorzugte Ausführungsform der Erfindung beschäftigt sich mit dem Fall, dass eine Überprüfungseinheit vorgesehen ist, die eine Plausibilitätsüberprüfung oder Validierung der von der in den Steckplatz eingebrachten ersten Art, zweiten Art oder dritten Art der anwendungsspezifischen Signalverarbeitungseinheit ermittelten Messwerte mit den durch die fest in der Messwandlerschaltung integrierten ersten Art , zweiten Art oder dritten Art der anwendungsspezifischen Signalverarbeitungseinheit ermittelten Messwerte ermöglicht.

In einer vorteilhaften Ausführungsform der erfindungsgemäßen Vorrichtung wird vorgeschlagen, dass zumindest eine leitungsgebundene Verbindung zur Übermittlung des einheitlich modulierten Ausgangssignals zwischen der Sensoreinheit und der anwendungsspezifischen Signalverarbeitungseinheit vorgesehen ist.

Eine vorteilhafte Ausführungsform der erfindungsgemäßen Vorrichtung ist darin zu sehen, dass zumindest ein Trennelement zur galvanischen Trennung der leitungsgebundenen Verbindung vorgesehen ist.

Eine alternative vorteilhafte Ausgestaltung der erfindungsgemäßen Vorrichtung sieht vor, dass eine drahtlose Verbindung zur Übermittlung der Energie, der Daten und des einheitlich modulierten Ausgangssignals zwischen der einheitliche Sensoreinheit und der anwendungsspezifischen Signalverarbeitungseinheit vorgesehen ist.

In einer weiteren bevorzugten Ausführungsform der erfindungsgemäßen Vorrichtung ist eine gemeinsame Taktleitung oder eine Präambel im einheitlich modulierten Ausgangssignal zur Synchronisation, z.B. der Taktfrequenz, der anwendungsspezifischen Signalverarbeitungseinheit und der Sensoreinheit vorgesehen.

Gemäß einer vorteilhaften Ausführungsform der erfindungsgemäßen Vorrichtung ist zumindest ein Lichtwellenleiter zur Übertragung der Energie, der Daten und des einheitlich modulierten Ausgangssignals zwischen der einheitlichen Sensoreinheit und der anwendungsspezifischen Signalverarbeitungseinheit vorgesehen.

Eine bevorzugte Ausgestaltung der Vorrichtung sieht insbesondere vor, dass Einstellungsparameter zur Versorgung der unterschiedlichen Arten von Sensoren und/oder zur Auswertung der elektrischen Messgröße der unterschiedlichen Arten von Sensoren in der Sensoreinheit abgelegt sind.

Bei einer bevorzugten Ausgestaltung der erfindungsgemäßen Vorrichtung ist in der Sensoreinheit eine Automationsroutine zur Einstellung der ermittelten Art des angeschlossenen Sensors entsprechenden Einstellungsparameter vorgesehen.

Bei einer weiteren bevorzugten Ausgestaltung der erfindungsgemäßen Vorrichtung sieht eine Parametrierungseinheit vor, die Daten zumindest zur Einstellung der Einstellungsparameter und/oder Daten zur Einstellung der Konditionierung des einheitlich konditionierten Ausgangssignals an die Sensoreinheit übermittelt.

Bei einer weiteren bevorzugte Ausführungsform der erfindungsgemäßen Vorrichtung wird davon ausgegangen, dass als einheitlich konditioniertes Ausgangssignal ein pulsweitenmoduliertes Signal vorgesehen ist.

Weitere bevorzugte Ausführungsformen der Vorrichtung nach der Erfindung sehen vor, dass als einheitlich konditioniertes Ausgangssignal ein frequenzmoduliertes Signal vorgesehen ist.

Eine ergänzende Ausführungsform der erfindungsgemäßen Vorrichtung erlaubt, dass als einheitlich konditioniertes Ausgangssignal ein pulsphasenmoduliertes Signal vorgesehen ist.

Weitere bevorzugte Ausführungsform der erfindungsgemäßen Vorrichtung berücksichtigen, dass die Sensoren als Heißleiter, Kaltleiter, Halbleiter-Temperatursensor, Thermoelement, Pyroelektrischer Temperatursensor, Curie-Effekt-Temperatursensor und/oder faseroptische Temperatursensor zur Ermittlung einer Temperatur als elektrische Messgröße der Prozessgröße ausgestaltet sind.

In einer anderen bevorzugten Ausführungsform der erfindungsgemäßen Vorrichtung sind Sensoren, die nach einem kapazitiven, piezoresistiven, optischen oder faseroptischen Wirkprinzip die Prozessgröße Druck in eine proportionale elektrische Messgröße umwandeln, zur Ermittlung eines Druckes als elektrische Messgröße der Prozessgröße vorgesehen.

Eine Ausgestaltung der erfindungsgemäßen Vorrichtung sieht dazu vor, dass Sensoren, die nach einem kapazitivem, konduktivem, piezoelektrischen Messprinzip oder Laufzeit-Messprinzip arbeiten, zur Ermittlung eines Füllstands oder eines Grenzstands in einem Behälter als elektrische Messgröße der Prozessgröße vorgesehen sind.

Eine Ausgestaltung der erfindungsgemäßen Vorrichtung beschäftigt sich mit dem Fall, dass Sensoren, die nach einem magnetisch-induktivem Messprinzip, Coriolis-, Wirbelstromzähl- oder Laufzeit-Messprinzip oder Venturi-, Blenden-, oder Staudrucksondenprinzip arbeiten, zur Ermittlung eines Durchflusses als elektrische Messgröße der Prozessgröße vorgesehen sind.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnungen, in der bevorzugte Ausführungsbeispiele der Erfindung dargestellt sind. In den Figuren dargestellte Ausführungsbeispiele der Erfindung sind zur besseren Übersicht und zur Vereinfachung die Bauteile oder die Bauteilgruppen, die sich in ihrem Aufbau und/oder in ihrer Funktion entsprechen, mit gleichen Bezugszeichen versehen. Es zeigt:
Fig. 1: ein erstes Ausführungsbeispiel einer erfindungsgemäßen Vorrichtung mit einer modular aufgebauten Messwandlerschaltung,
Fig. 1a: ein weiteres erstes Ausführungsbeispiel einer erfindungsgemäßen Vorrichtung mit einer modular aufgebauten Messwandlerschaltung für OEM-Produkte,
Fig. 2: ein zweites Ausführungsbeispiel einer erfindungsgemäßen Vorrichtung mit einer modular aufgebauten Messwandlerschaltung,
Fig. 3: ein drittes Ausführungsbeispiel einer erfindungsgemäßen Vorrichtung mit einer modular aufgebauten Messwandlerschaltung,
Fig. 4: ein viertes Ausführungsbeispiel einer erfindungsgemäßen Vorrichtung mit einer modular aufgebauten Messwandlerschaltung,
Fig. 5: ein fünftes Ausführungsbeispiel einer erfindungsgemäßen Vorrichtung mit einer modular aufgebauten Messwandlerschaltung,
Fig. 6: ein sechstes Ausführungsbeispiel einer erfindungsgemäßen Vorrichtung mit einer modular aufgebauten Messwandlerschaltung,
Fig. 7: ein siebtes Ausführungsbeispiel einer erfindungsgemäßen Vorrichtung mit einer modular aufgebauten Messwandlerschaltung,
Fig. 8: ein achtes Ausführungsbeispiel einer erfindungsgemäßen Vorrichtung mit einer modular aufgebauten Messwandlerschaltung,
Fig. 9: ein erstes Applikationsbeispiel des fünften Ausführungsbeispiels der erfindungsgemäßen Vorrichtung in einem verteilten Prozessmesssystem, und
Fig. 10: ein zweites Applikationsbeispiel des fünften Ausführungsbeispiels der erfindungsgemäßen Vorrichtung in einem verteilten Prozessmesssystem.

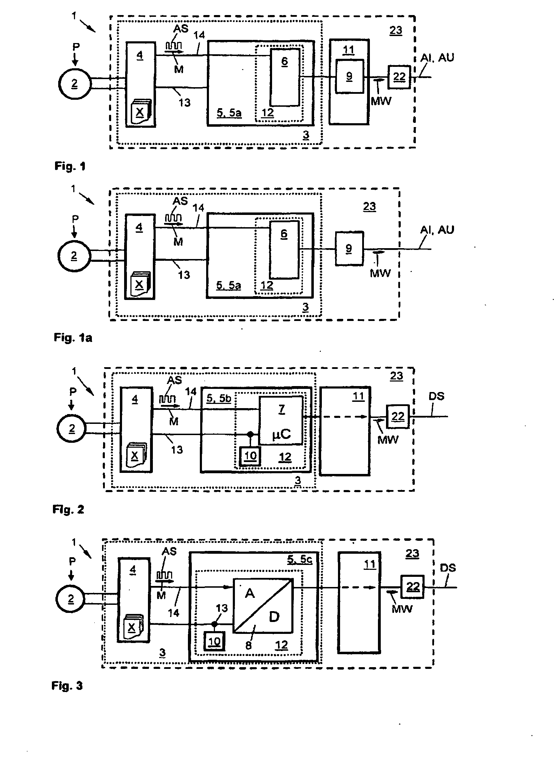

Die Erfindung ist, eine Messwandlerschaltung 3 mit Komponenten, wie z.B. einer vereinheitlichten Sensoreinheit 4, eine Regel-/Auswerteeinheit 11, einer Energieversorgungseinheit und einer Kommunikationsschnittstelle 22 entsprechend vorkonfektioniert auszustatten und je nach Messperformance bzw. gewünschter Messgenauigkeit des Messwerts MW der Prozessgröße P zumindest eine erste Art 5a, eine zweite Art 5b und/oder eine dritte Art 5c der anwendungsspezifischen Signalverarbeitungseinheit 5 modular einzusetzen. Die erfindungsgemäße modular aufgebaute Messwandlerschaltung 3 ist beispielsweise, wie in Fig. 1 gezeigt, in einem Messumformer 23 integriert. Andererseits ist es möglich, dass die Messwandlerschaltung 3 mit dem Sensor 2 direkt, ohne Integration in einem Messumformer 23, in einem Gerät oder einer Anlage eingebaut ist. Diese erfindungsgemäße Messwandlerschaltung 3 wandelt die elektrische Messgrößen M von angeschlossenen Sensoren 2 in einen durch ein proportionales, analoges oder digitales Messsignal abbildenden Messwert MW um. Ein Sensor 2 bzw. Messfühler ist ein technisches Element, welches bestimmte physikalische oder chemische Prozessgrößen, wie z. B. den Füllstand, Durchfluss, Druck, den pH-Wert, die Temperatur, die Feuchtigkeit, die Leitfähigkeit als elektrische Messgröße M quantitativ ermittelt. Diese Prozessgrößen P werden mittels physikalischer oder chemischer Effekte von den Sensoren 2 erfasst und in eine proportionale, weiterverarbeitbare, elektrische Messgröße M umgeformt. Die Signalverarbeitungseinheit 5 beinhaltet beispielsweise auch eine Signalaufbereitungseinheit, die das ermittelte Messsignal entsprechend linearisiert, verstärkt, skaliert und/oder kalibriert.

In Fig. 1 ist ein erstes Ausführungsbeispiel einer erfindungsgemäßen Vorrichtung 1 mit einem Messumformer 23 und einem Sensor 2 aufgezeigt. Die Vorrichtung 1 wird allgemein auch als Feldgerät oder Sensorsystem bezeichnet. In dem Messumformer 23 ist eine modular aufgebaute Messwandlerschaltung 3 vorgesehen, die zumindest aus einer einheitlichen Sensoreinheit 4 und einer ersten Art 5a der anwendungsspezifischen Signalverarbeitungseinheit 5 aufgebaut ist. Die erste Art 5a der anwendungsspezifischen Signalverarbeitungseinheit 5 ist für Anwendungen mit einer niedrigen Anforderung an die Messgenauigkeit der mit der Vorrichtung 1 ermittelten Messwerte MW der Prozessgröße P vorgesehen. Unter dem Begriff der Messgenauigkeit ist in der Messtechnik der Grad der Übereinstimmung zwischen dem ermittelten Messwert MW und dem absoluten Istwert des Messwert MW zu verstehen. Gegebenenfalls ist, wie in Fig. 1 dargestellt, eine Regel-/Auswerteeinheit 11 und eine Kommunikationsschnittstelle 22 in dem Messumformer 23 integriert. An dem Messumformer 23 ist zumindest ein Sensor 2 angeschlossen, der eine Prozessgröße P in einem Prozess ermittelt. Die Prozessgrößen P in einem Prozess sind hier beispielsweise prozessabhängige, physikalische Größen, wie z.B. den Druck, den Füllstand, den Durchfluss, die Temperatur, und mediumsabhängige, physikalische Größen, wie z.B. die Dichte, die Leitfähigkeit des Mediums. Diese vom Sensor 2 erfasste Prozessgröße P wird von der Sensoreinheit 4 erfasst und anhand der durch die vorliegenden Einstellungsparametern X eingestellten Sensoreinheit 4 in eine elektrische Messgröße M umgesetzt. In den Einstellungsparametern X wird der Sensoreinheit 4 vorgegeben, wie die Prozessgröße P des Sensors 2 zu erfassen und in ein der elektrischen Messgröße M entsprechendes moduliertes Ausgangssignal AS umzusetzen ist. Die Sensoreinheit 4 ist so ausgebildet, dass jede elektrische Messgröße M als ein entsprechendes konditioniertes moduliertes Ausgangssignal AS an die anwendungsspezifische Auswerteeinheit 5 übermittelt wird. Die Sensoreinheit 4 ist über die Einstellungsparameter X so eingestellt, dass je nach Höhe der ermittelten elektrischen Messgröße M ein proportionales, moduliertes Ausgangssignal AS über eine leitungsgebundene Verbindung 14 übermittelt wird. Als konditioniertes, moduliertes Ausgangssignal AS kann beispielsweise ein pulsweitenmoduliertes, frequenzmoduliertes, pulsphasenmoduliertes Strom- Spannungs-, optisches- oder elektromagnetisches Signal eingesetzt werden. Die in Fig. 1 dargestellte erste Art 5a der anwendungsspezifischen Signalverarbeitungseinheit 5 ist beispielsweise im einfachsten Fall als ein Tiefpass 6 ausgestaltet, der aus dem übermittelten modulierten Ausgangssignals AS, z.B. einem pulsweitenmodulieten Signal, einen entsprechenden, gemittelten, gleichförmigen Strom- oder Spannungswert erzeugt. Dieser Tiefpass 6 ist als ein Modul ausgestaltet, das sich über einen Steckplatz 12 in der Messwandlerschaltung 3 integrieren lässt.

Ein Signalumsetzter 9 wandelt das von dem Tiefpass 6 geglättete, gemittelte Ausgangssignal AS in ein entsprechendes analoges Stromsignal Al oder ein analoges Spannungssignal AU um und/oder passt die Größenzuordnung des geglätteten, gemittelten Ausgangssignals AS dem analogen Stromsignal Al bzw. Spannungssignal AU an. Dieser Signalumsetzer 9 ist beispielsweise in der Regel-/Auswerteeinheit 11 integriert, jedoch lässt sich dieser Signalumsetzer 9 auch in dem Modul der anwendungsspezifischen Signalverarbeitungseinheit 5 der ersten Art 5a integrieren.

Die analogen Stromsignale Al bzw. Spannungssignale AU werden dann entweder direkt an weitere Elektronikeinheiten in Geräten wie z.B. im OEM-Bereich (Original Equipment Manufacturer) oder über eine Kommunikationsschnittstelle 22 der erfindungsgemäßen Vorrichtung 1, an weitere Feldgeräte oder eine Leitstelle 30 weitergeleitet. Unter dem Begriff des OEM-Produzenten versteht man einen Hersteller, der selbst produzierte Teilprodukte und/oder Produkte für Geräte- oder Anlagenbauer herstellt.

In Fig. 1a ist ein weiteres erstes Ausführungsbeispiel einer erfindungsgemäßen Vorrichtung 1 mit einer modular aufgebauten Messwandlerschaltung 3 und einem Sensor 2 aufgezeigt. Diese Ausgestaltung der Vorrichtung 1 ist so aufgebaut, dass die Messwandlerschaltung 3 entgegen der Messwandlerschaltung 3 aus Fig. 1 keine Regel-/Auswerteinheit 11 und Kommunikationsschnittstelle 22 umfasst. Bei diesem Ausführungsbeispiel wird die Vorrichtung 1 direkt in ein übergeordnetes Messsystem oder Gerät z.B. im OEM-Bereich integriert, und der Messwert MW wird durch den Signalumsetzer 9 als skaliertes, analoges Stromsignal Al oder analoges Spannungssignal AU ausgegeben.

In Fig. 2 ist ein zweites Ausführungsbeispiel einer erfindungsgemäßen Vorrichtung 1 mit einer modular aufgebauten Messwandlerschaltung 3 und einem Sensor 2 aufgezeigt. Die modular aufgebaute Messwandlerschaltung 3 ist zumindest aus einer einheitlichen Sensoreinheit 4 und einer zweiten Art 5b der anwendungsspezifischen Signalverarbeitungseinheit 5 für eine Anwendung mit einer mittleren Anforderung an die Messgenauigkeit aufgebaut. Diese zweite Art 5b der anwendungsspezifischen Signalverarbeitungseinheit 5 ist beispielsweise als eine Zählerschaltung 7 ausgebildet, die das konditionierte Ausgangssignal AS entsprechend abtastet. Die Zählerschaltung 7 ist beispielsweise als ein Mikrokontroller zur Signalverarbeitung ausgestaltet. Die Zählerschaltung 7 tastet das modulierte Ausgangssignal AS mittels Abtastimpulsen ab und ermittelt daraus einen der elektrische Messgröße M und der Prozessgröße P entsprechenden Wert. Zur Synchronisation der Erzeugung des entsprechend modulierten Ausgangssignal AS in der Sensoreinheit 4, die als Signalkonditionierer ausgebildet ist, und zur Auswertung dieser entsprechend modulierten Ausgangssignale ist ein gleicher Takt vorgesehen. Hierzu ist beispielsweise in der Signalverarbeitungseinheit 5 ein Taktgeber 10 integriert, der über eine Taktleitung 13 die Sensoreinheit 4 und die Signalverarbeitungseinheit 5 mit dem gleichen Taktsignal versorgt. Der aus dem abgetasteten Ausgangssignal AS ermittelte, digitalisierte Wert wird an eine Regel-/Auswerteeinheit 11 weitergegeben, die daraus mittels weiterer Signalverarbeitung und Auswertungsalgorithmen einen Messwert MW generiert. Dieser Messwert MW der erfindungsgemäßen Vorrichtung 1 wird über eine Kommunikationsschnittstelle 22 beispielsweise als Digitalsignal DS auf dem Feldbus 33 oder als analoges Kommunikationssignal nach dem zwischen 4 mA und 20 mA liegenden Stromschleifen-Standard auf einer Zweidrahtleitung 33 an weitere Elektronikeinheiten, Feldgeräte oder eine Leitstelle 30 gesandt.

In Fig. 3 ist ein drittes Ausführungsbeispiel einer erfindungsgemäßen Vorrichtung 1 mit einer modular aufgebauten Messwandlerschaltung 3 und einem Sensor 2 aufgezeigt. Die modular aufgebaute Messwandlerschaltung 3 ist zumindest aus einer einheitlichen Sensoreinheit 4 und einer dritten Art 5c der anwendungsspezifischen Signalverarbeitungseinheit 5 für eine Anwendung mit einer hohen Anforderung an die Messgenauigkeit aufgebaut. Hierzu wurde in den Steckplatz 12 eine Analog-Digital-Wandlerschaltung 8 eingesetzt, die es ermöglicht schnell und hochgenau, aus einer in dem einheitlich, modulierten Ausgangssignal AS umgesetzten elektrischen Messgröße M einen exakten Messwert MW der Prozessgröße P zu ermitteln. Es gibt eine Vielzahl von Analog-Digital-Wandlerschaltungen 8, die alle in der erfindungsgemäßen Vorrichtung 1 als eine dritten Art 5c der anwendungsspezifischen Signalverarbeitungseinheit 5 in der modular aufgebauten Messwandlerschaltung 3 eingesetzt werden können. Eine in der erfindungsgemäßen Vorrichtung verwendbare A/D Wandlerschaltung ist beispielsweise in EP 0 237 583 B1 beschrieben.

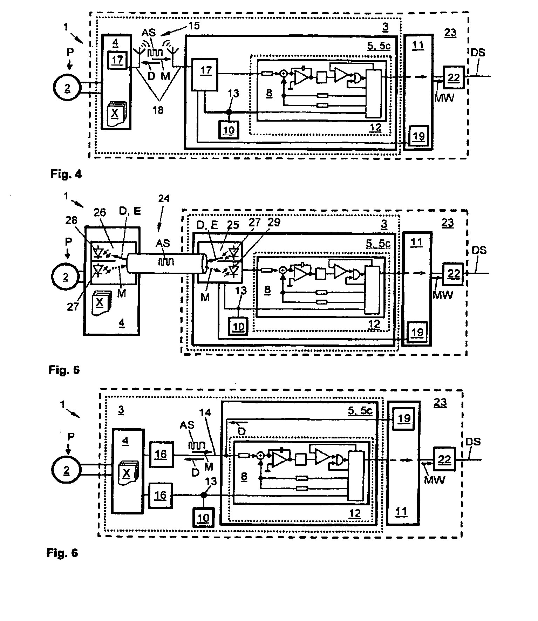

In der Prozessmesstechnik ist z.T. eine galvanische Trennung vorgeschrieben, da der Prozessraum oder die mit dem Prozess in Berührung stehenden Elemente aufgrund der Anforderungen des Explosionsschutzes auf Erdpotential gelegt werden müssen. Die Bezugsmassen der erfindungsgemäßen Vorrichtungen 1 bzw. der Feldgeräte weichen jedoch meist von dem Erdpotential ab. Die Differenz der beiden Potentiale resultiert in einer Spannung, die zwischen den geerdeten Prozesselementen und der Vorrichtung 1 anliegt, wodurch ein Strom verursacht wird. Dieser Strom hat den Nachteil, dass die Leitungen der Bezugsmasse durch den Stromfluss zusätzlich beansprucht werden. Dies kann dazu führen, dass Energie gespeichert wird, so dass die Zündschutzart "Eigensicherheit" des Feldgerätes bzw. der Vorrichtung 1 nicht mehr gewährleistet ist. In der Fig. 4 und der Fig. 5 sind hierzu zwei Beispiele zur galvanischen Trennung der Kommunikationsverbindung zwischen der Sensoreinheit 4 und der Signalverarbeitungseinheit 5 aufgezeigt.

In Fig. 4 ist viertes Ausführungsbeispiel einer erfindungsgemäßen Vorrichtung 1 mit einer modular aufgebauten Messwandlerschaltung 3 aufgezeigt, bei dem die Kommunikation der elektrische Messgröße M und der Daten D zwischen der Sensoreinheit 4 und der anwendungsspezifischen Signalverarbeitungseinheit 5 über eine drahtlose Verbindung 15 erfolgt. Als anwendungsspezifische Signalverarbeitungseinheit 5 ist in den Ausführungsbeispielen der Fig. 4 und Fig. 5 eine spezielle Analog-Digital-Wandlerschaltung 8 angegeben, die eine schnelle und hochgenaue Ermittlung des Messwerts aus der Prozessgröße ermöglicht. Der Aufbau und die Funktionsweise dieser speziellen Analog-Digital-Wandlerschaltung 8 ist beispielsweise der EP 0 237 583 B1 zu entnehmen und wird hier nicht weiter ausführlich diskutiert. Diese drahtlose Verbindung 15 ist vor allen Dingen, dann von Vorteil, falls die Energieversorgung und die Kommunikation zwischen Sensoreinheit 4 und Signalverarbeitungseinheit 5 mittels einer RFID-Transpondertechnik erfolgt. Dabei fungiert die Sensoreinheit 4 mit dem Sensor 2 als Transponder, der von der Signalverarbeitungseinheit 5 als ein Lesegerät ausgelesen werden kann. Die Datenübertragung zwischen dem Transponder und Lesegerät findet im Normalfall mittels elektromagnetischer Wellen statt. Bei niedrigen Frequenzen wird dies durch eine induktive Nahfeldkopplung und bei höheren Frequenzen durch ein elektromagnetisches Fernfeldkopplung erreicht. In der Sensoreinheit 4 und der Signalverarbeitungseinheit 5 sind als drahtlose Kommunikationselemente ein Sende-/Empfangseinheit 17 und ein Sendelement 18, z.B. als Antenne oder Spule, integriert. Dieses Ausführungsbeispiel ist besonders bei Sensoren 2 interessant, die selbst kaum oder wenig Energie verbrauchen. Außerdem ist in aktiven RFID-Transpondern meist ein kleiner aufladbarer Energiespeicher integriert. Die Synchronisation der Taktung in der Sensoreinheit 4 und der Signalverarbeitungseinheit 5 erfolgt in dieser Ausführungsform der Erfindung dadurch, dass zu Beginn des Abrufs der elektrischen Messgröße M von der Sensoreinheit 4 durch die Signalverarbeitungseinheit 5 benötigte Energie, z.B. eventuell zum Aufladen der Energiespeichereinheit, und das Taktsignal an die Sensoreinheit 4 übertragen wird. In diesem Fall können mehrere Sensoren 2 an einer Signalverarbeitungseinheit 5 betrieben werden. Zur Unterscheidung der verschieden Sensoren 2 muss hierzu eine Kennung, z.B. in den Einstellungsparametern X der Sensoreinheit 4, hinterlegt werden. Die Einspeisung der Daten D, z.B. der Einstellungsparameter X in die Sensoreinheit 4 und/oder zur Einstellung der Konditionierung des einheitlich konditionierten Ausgangssignals AS, erfolgt über eine Parametrisierungseinheit 19 die beispielsweise der Regel-/Auswerteinheit 11 zugeordnet ist. Wenn die Parametrisierungseinheit 19 Daten D an die Sensoreinheit 4 übermittel möchte, signalisiert die Parametrisierungseinheit 19 die Sendebereitschaft an die Sensoreinheit 4 indem ein Signalisierungssignal mittels der Sendeempfangseinheiten 17 und der Sendeelemente 18 über die drahtlose Verbindung 15 an die Sensoreinheit 4 übermittelt wird. Nach dem Signalisierungssignal schaltet die Sensoreinheit 4 in einen Empfangsmodus um, indem die Einstellungsparameter X von der Parametrisierungseinheit 19 übertragen werden und die Übertragung der elektrischen Messgröße M als konditioniertes Ausgangssignal AS für die Zeit der Übertragung angehalten wird.

In Fig. 5 ist ein weiteres, fünftes Ausführungsbeispiel zur galvanischen Trennung zwischen der Sensoreinheit 4 und der anwendungsspezifischen Signalverarbeitungseinheit 5 dargestellt. Als Übertragungsmedium zwischen der Sensoreinheit 4 und der anwendungsspezifischen Signalverarbeitungseinheit 5 wird in diesem Ausführungsbeispiel ein Lichtwellenleiter 24 eingesetzt. Über diesen Lichtwellenleiter 24 wird die Sensoreinheit 4, falls erforderlich, mit der benötigten Energie E versorgt, sowie gleichzeitig die Daten D und das konditionierte Ausgangssignal AS zwischen der Sensoreinheit 4 und der anwendungsspezifischen Auswerteeinheit 5 bidirektional übertragen. Als Lichtwellenleiter 24 werden die bekannten Arten, wie beispielsweise Multimode oder Monomode Glasfasern, verwendet. In der anwendungsspezifischen Signalverarbeitungseinheit 5 ist zur Ein- und Auskopplung der optischen Signale in den Lichtwellenleiter 24 eine erste optische Sender-/Empfängereinheit 25 und in der Sensoreinheit 4 eine zweite optische Sender-/Empfängereinheit 26 vorgesehen. Die zweite optische Sender-/Empfängereinheit 26 besteht zumindest aus beispielsweise einem Photovoltaikelement 28, zur Umwandlung des von der anwendungsspezifischen Auswerteeinheit 5 übermittelten optischen Energiesignals E in eine elektrische Leistung, und einem Leuchtelement 27, zur Erzeugung der Messgröße M als optisches konditioniertes Ausgangssignal AS. Als Photovoltaikelement 28 können beispielsweise konzentrierte Solarzellen oder mehrschichtige Solarzellen verwendet werden. Zusätzlich zum Photovoltaikelement 28 kann als Empfängerelement in der Sensoreinheit 4 ein photoempfindliches Element 29 integriert sein, das die von der anwendungsspezifischen Auswerteeinheit 5 übermittelten Daten D empfängt. Dieses zusätzliche photoempfindliche Element 29 ist in den Figuren nicht explizit gezeigt und kann auch eingespart werden, falls sich das Datensignal D von dem Energiesignal E mittels dem Photovoltaikelement 28 signaltechnisch unterscheiden und trennen lässt. Das Photovoltaikelement 28 wandelt in diesem Falle das Energiesignal E in eine entsprechende elektrische Energie um, gleichzeitig empfängt das Photovoltaikelement 28 das optische Datensignal D und wandelt dieses in ein elektrisches Datensignal D um. Am anderen Ende des Lichtwellenleiters 24 in der Messwandlerschaltung 3 ist eine erste optische Sender-/Empfängereinheit 25 bestehend aus zumindest einen Leuchtelement 27 und einem photoempfindlichen Element 29 vorgesehen. Als Leuchtelement 27 wird beispielsweise eine Leuchtdiode oder eine Laserdiode und als photoempfindliches Element 29 wird beispielsweise eine Photodiode oder ein Phototransistor eingesetzt. Zur signaltechnischen Trennung des Energiesignals E, des Datensignals D und des konditionierten Ausgangssignals AS voneinander, werden die einzelnen Signale in unterschiedlichen Strahlungsspektren übertragen. Durch optische Filter vor den Empfängern lassen sich die entsprechenden Spektralanteile im übertragenen Lichtsignal herausfiltern und somit können die einzelnen Signale, wie z.B. Datensignal D, Energiesignal E und konditioniertes Ausgangssignal AS, signaltechnisch getrennt werden. Weiterhin besteht die Möglichkeit die Signale D, E, AS durch Modulationsarten voneinander zu trennen. Das Energiesignal E wird beispielsweise in der ersten optische Sender-/Empfängereinheit 25 durch eine Laserdiode, die beispielsweise ein Dauerlicht im Infrarot-Bereich abstrahlt, erzeugt und in der zweiten optische Sender-/Empfängereinheit 26 wird das Energiesignal E von dem Photovoltaikelement 28 in eine elektrische Energie zurückgewandelt. Diese gewandelte, elektrische Energie wird zur Energieversorgung der Sensoreinheit 4 und des Sensors 2 genutzt. Die Sensoreinheit 4 ist in diesem fünften Ausführungsbeispiel nicht in der Messwandlerschaltung 3 und dem Messumformer 23 integriert. Hierdurch ist es möglich die Sensoreinheit 4 mit dem Sensor 2 an einem weiter entfernten Ort und getrennt vom Messumformer 23 zu installieren. Diese getrennte Ausführung der Messwandlerschaltung 3 und der Sensoreinheit 4 ist auch auf die weiteren Ausführungsbeispiele in den anderen Figuren übertragbar. Die Taktsynchronisation erfolgt wie im Ausführungsbeispiel in Fig. 3 angeführt, jedoch mittels eines optisch übertragenen Taktsignals.

Ein ergänzendes Ausführungsbeispiel zur galvanischen Trennung zwischen der Sensoreinheit 4 und der anwendungsspezifischen Signalverarbeitungseinheit 5 ist in Fig. 6 aufgezeigt, bei dem die Kommunikation der elektrischen Messgröße M und der Daten D über eine leitungsgebundene Verbindung 14 mit Trennelementen 16 zur galvanischen Trennung erfolgt. Ausführungsbeispiele für solche galvanischen Trennelemente 16 sind Optokoppler, Übertrager oder Kopplerstrukturen zur elektromagnetischen oder kapazitiven Kopplung eines hochfrequenten Übertragungssignals. In diesem Ausführungsbeispiel ist der Taktgeber 10 fest im Aufbau der Messwandlerschaltung 3 und/oder des Messumformers 23 integriert.

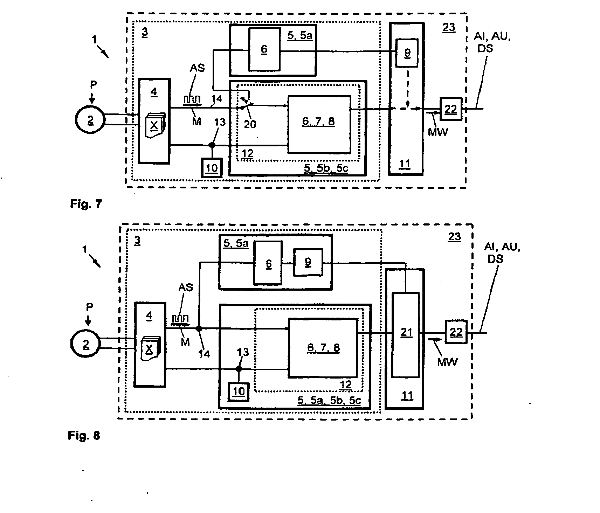

In Fig. 7 ist ein siebtes Ausführungsbeispiel einer erfindungsgemäßen Vorrichtung 1 mit einer modular aufgebauten Messwandlerschaltung 3 und einem Sensor 2 aufgezeigt. In diesem Ausführungsbeispiel ist eine Signalverarbeitungseinheit 5 der ersten Art 5a mit einer niedrigen Anforderung an die Messgenauigkeit fest in der Messwandlerschaltung 3 und/oder im Messumformer 23 integriert. Wird hingegen eine höhere Anforderung an Messgenauigkeit mit der Messwert MW der Prozessgröße P ermittelt wird erforderlich, so kann in den Steckplatz eine Signalverarbeitungseinheit 5 mit einer höheren Messgenauigkeit eingesetzt werden. Wird in den Steckplatz 12 eine weitere Signalverarbeitungseinheit 5, z.B. der dritten Art 5c mit einer Analog-Digital-Wandlerschaltung 8, eingesetzt, so schaltet ein Schaltelement 20 die Verbindungsleitung 14 auf die Signalverarbeitungseinheit 5 in dem Steckplatz 12 um. Das Schaltelement 20 ist dem Steckplatz 12 zugeordnet und wird durch das Einfügen einer Signalverarbeitungseinheit 5 der zweiten Art 5b oder der dritten Art 5c in den Steckplatz ausgelöst. In der Standardausführung ist somit keine Signalverarbeitungseinheit 5 in dem Steckplatz 12 integriert. Wird jedoch eine höhere Messperformance benötigt, kann der entsprechende Nachrüstsatz als Signalverarbeitungseinheit 5 der zweiten Art 5b oder der dritten Art 5c in den Steckplatz 12 eingesetzt werden.

In Fig. 8 ist ein achtes Ausführungsbeispiel einer erfindungsgemäßen Vorrichtung 1 mit einer modular aufgebauten Messwandlerschaltung 3 und einem Sensor 2 aufgezeigt. Zusätzlich zu der fest in der Messwandlerschaltung 3 und/oder fest im Messumformer 23 integrierten ersten Art 5a einer Signalverarbeitungseinheit 5 ist in dem Steckplatz 12 eine weitere Signalverarbeitungseinheit 5 der ersten Art 5a, der zweiten Art 5b oder der dritten Art 5c modular eingesetzt. Die beiden Messwerte MW dieser beiden Signalverarbeitungseinheiten 5 werden in einer Überprüfungseinheit 21, die beispielsweise in der Auswerteeinheit 11 vorgesehen ist, validiert und verifiziert. Die Überprüfungseinheit 21 führt hierzu eine Plausibilitätsüberprüfung oder Validierung der einzelnen Messwerte MW zueinander durch, indem der in den Steckplatz 12 eingebrachten ersten Art 5a, zweiten Art 5b oder dritten Art 5c der anwendungsspezifischen Signalverarbeitungseinheit 5 ermittelten Messwerte MW mit den durch die fest in der Messwandlerschaltung 3 und/oder fest in dem Messumformer 23 integrierten ersten Art 5a der anwendungsspezifischen Signalverarbeitungseinheit 5 ermittelten Messwerte MW ermöglicht. Des Weiteren ist es möglich durch den direkten Vergleich der mittels unterschiedlichen Arten 5a, 5b, 5c der Signalverarbeitungseinheit 5 ermittelten Messwerte MW einer gemeinsamen Prozessgröße P den Messfehler, und/oder Messunsicherheit der gesamten Messung der erfindungsgemäßen Vorrichtung 1 zu verringern und somit die Verfügbarkeit zu erhöhen. Durch dieses Ausführungsbeispiel ist es möglich, die Ermittlung des Messwerte MW der Prozessgröße P mittels der fest in der Messwandlerschaltung und/oder im Messumformer 23 integrierten ersten Art 5a der Signalverarbeitungseinheit 5 durch den kurzzeitigen Einsatz einer Signalverarbeitungseinheit 5 der zweiten Art 5b oder der dritten Art 5c in den Steckplatz 12 zu überprüfen oder auch zu kalibrieren. Somit können kostengünstiger Feldgeräte bzw. Vorrichtungen 1 mit einer geringeren Anforderung an Messgenauigkeit durch den Einsatz einer Signalverarbeitungseinheit 5 der zweiten Art 5b oder der dritten Art 5c beispielsweise in der Kalibrierungsphase in der Produktion kalibriert und überprüft werden. Diese Funktionalität der Überprüfung des Messwerts MW der Prozessgröße P der fest installierten Signalverarbeitungseinheit 5 ist auch von Nutzen, wenn ein Servicetechniker die Funktionalität und Messgenauigkeit des Feldgeräts bzw. der Vorrichtung 1 zu überprüfen hat. Als fest integrierte Signalverarbeitungseinheit ist genauso eine Ausführung der zweiten Art 5b oder der dritten Art 5c einsetzbar.

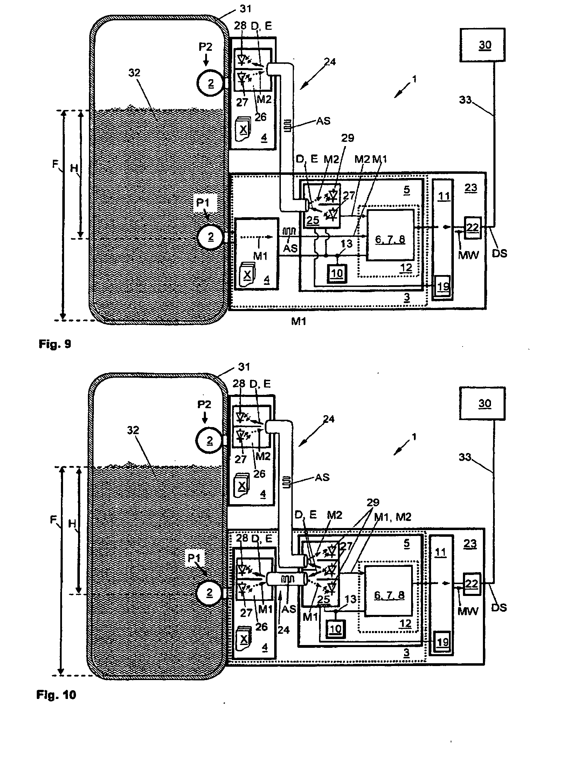

In Fig. 9 und Fig. 10 sind ein erstes und ein zweites Applikationsbeispiel des fünften Ausführungsbeispiels aus Fig. 5 aufgezeigt, welche eine Vorrichtung 1 zur Ermittlung des Füllstands F eines Füllguts 32 in einem Behälter 31 nach dem hydrostatischen Druckmessprinzip anwendet. Bei diesem Messprinzip wird oberhalb des maximal möglichen Füllstands F ein zweiter Druck-Sensor 2 zur Bestimmung der zweiten Messgröße M2 aus dem Kopfdruck als zweite Prozessgröße P2 und unterhalb des minimal möglichen Füllstands F ein erster Druck-Sensor 2 zur Bestimmung der ersten Messgröße M1 als erste Prozessgröße P1 installiert. Wenn die Dichte des Füllguts nicht schwankt, lässt sich aus dieser Druckdifferenz unter Berücksichtigung der Schwerkraft eine Höhe H der Grenzfläche des Füllguts zwischen dem ersten und zweiten Druck-Sensor 2 bestimmen. Zur Messung der Messgröße M Differenzdruck werden Differenzdruckaufnehmer in einer Vielzahl von Anwendungen eingesetzt. Neben der Messgröße M Differenzdruck als solches ist mit einem Differenzdruckaufnehmer auch aufgrund einer hydrostatischen Druckdifferenz ein Füllstand in einem Behälter bestimmbar. Genauso kann jedoch auch aus der Staudruckdifferenz zwischen zwei verschiedenen Orten unterschiedlichen Querschnitts in einem horizontal angeordneten Gerinne oder vor und nach einer Engstelle z.B. durch eine Blende oder durch Staudrucksonden ein Durchfluss als Messgröße M bestimmt werden.

Üblicherweise gestaltet sich die Vorrichtung 1 zur Ermittlung der hydrostatischen Druckdifferenz so, dass an der Position unterhalb des geringsten Füllstands F ein Differenzdruckaufnehmer am Behälter 31 platziert ist und der Kopfdruck über eine Kapillare dem Differenzdruckaufnehmer zugeführt ist. Aufgrund von Temperatureinflüssen auf die Kapillare kann die Messgenauigkeit der Messung negativ beeinflusst werden. Des Weiteren ist es aus der Druckschrift DE 694 33 185 T2 bekannt geworden, den Differenzdruck mittels zweier einzelner Druck-Transmitter zu ermitteln, die jeweils über eine elektrische Leitung mit einem Messumformer zur Ermittlung der Druckdifferenz verbunden sind.

Das Ausführungsbeispiel in Fig. 9 zeigt eine erste Variante der Vorrichtung 1 zur Ermittlung der hydrostatischen Druckdifferenz bei der unterhalb der Position des geringsten Füllstandes F am Behälter 31 ein erfindungsgemäßer Messumformer 23 mit einem Druck-Sensor 2 angebracht ist. Die Messwandlerschaltung 3 in dem Messumformer 23 enthält zusätzlich eine erste optische Sende-/Empfängereinheit 25, über die mittels einem Lichtwellenleiter 24 ein weiterer Druck-Sensor zur Messung des Kopfdrucks angeschlossen, versorgt und ausgewertet werden kann.

In der ersten optischen Sende-/Empfängereinheit 25 ist zumindest ein Leuchtelement 27, z.B. eine Leuchtdiode, und ein photoempfindliches Element 29 integriert. Das Leuchtelement 27 erzeugt die Energie E und die Daten D als Lichtsignal und koppelt dieses Lichtsignal zur Übertragung an die Sensoreinheit 4 in den Lichtwellenleiter 24 ein. Die optische Energie E des Lichtsignals wird in der zweiten optischen Sende-/Empfängereinheit 26 der Sensoreinheit 4, beispielsweise durch ein Photovoltaikelement 28, in elektrische Energie zurück gewandelt. Die Sensoreinheit 4 versorgt sich über diese zurück gewandelte Energie des Photovoltaikelements 28. Die zweiten optischen Sende-/Empfängereinheit 26 enthält zur Übertragung des konditionierten Ausgangssignals AS ein Leuchtelement 27, dass das konditionierte Ausgangssignal AS als Lichtsignal in den Lichtwellenleiter einkoppelt. Somit ist der weitere Druck-Sensor 2 zur Messung des Kopfdrucks über den Lichtwellenleiter 24 und durch die Umsetzung des elektrischen Signals in ein optisches Signal galvanisch von dem restlichen Messumformer 23 getrennt. Die beiden Sensoreinheiten 4 senden die erste Messgröße M1 und die zweite Messgröße M2 gleichzeitig oder zeitlich versetzt an die anwendungsspezifische Auswerteinheit 5. Werden die Messgrößen M1, M2 gleichzeitig an die anwendungsspezifische Auswerteinheit 5 gesendet, ist vor der Signalauswertung eine Differenzbildung der beiden Messgrößen M1, M2 vorgesehen. Andererseits kann bei einer zeitlich versetzten Übertragung der Messgrößen M1, M2 durch das konditionierte Ausgangssignal AS die Differenzbildung nach der Signalauswertung durch die anwendungsspezifische Auswerteinheit 5 erfolgen.

Das Ausführungsbeispiel in Fig. 10 zeigt eine zweite Variante der Vorrichtung 1 zur Ermittlung der hydrostatischen Druckdifferenz bei der unterhalb der Position des geringsten Füllstandes F am Behälter 31 ein erfindungsgemäßer Messumformer 23 mit einem Druck-Sensor 2 angebracht ist. Erfindungsgemäß besteht dessen modular aufgebaute Messwanderschaltung 3 aus einer Sensoreinheit 4 und einer anwendungsspezifischen Auswerteeinheit 5, die über einen optischen Lichtwellenleiter 24 galvanisch getrennt kommunizieren. Um den Kopfdruck, d.h. den Druck der Gasphase im Behälter 31, zu bestimmen ist ein weiterer Druck-Sensor 2 oberhalb des maximalen Füllstands F platziert, der mittels der beigeordneten Sensoreinheit 4 über einen weiteren Lichtwellenleiter 24 mit der anwendungsspezifischen Auswerteeinheit 5 kommuniziert. Zur Übertragung des konditionierten Ausgangssignals AS und der Energie E über die Lichtwellenleiter 24 sind in den beiden Sensoreinheiten 4 entsprechende zweite optische Sender-/Empfängereinheiten 26, sowie in der anwenderspezifischen Auswerteeinheit 5 zumindest eine erste optische Sender-/Empfängereinheiten 25 vorgesehen. Die optische Sender-/Empfängereinheiten 26 ist beispielsweise so ausgestaltet, dass für jeden Kanal bzw. jeden angeschlossenen Sensor 2 ein eigenes photoempfindliches Element 28 vorgesehen ist. Beispielsweise wird zu Energieversorgung der Sensoreinheiten 4 in der anwendungsspezifischen Auswerteeinheit 5 nur eine Laserdiode 27 vorgesehen. Die signaltechnische Trennung der einzelnen Kanäle erfolgt beispielsweise durch Signalkodierung, optische Multiplexverfahren, eine Auftrennung in unterschiedliche Spektralbereiche oder einer räumlichen bzw. optischen Abtrennung. Es ist auch denkbar, optische Drucksensoren, wie z.B. in den Druckschriften DE 100 556 29 A1, DE 102005016641 A 1, EP 1 008 840 A1 und DE 40 18 998 A1 beschrieben, einzusetzen. Diese optischen Drucksensoren haben den Vorteil, dass diese keine zusätzliche Energieversorgung der Sensoreinheit 4 benötigen, sondern meist auf der Messung der Änderung einer optischen Eigenschaft des Lichtwellenleiters 24 oder eines Elements, z.B. eines Doppelbrechendes Kristalls, am Ende des Lichtwellenleiters 24 aufgrund einer Druckänderung basieren.

### Bezugszeichenliste

**Tabelle 1**

| | |
|---|---|
| 1 | Vorrichtung |
| 2 | Sensor |
| 3 | Messwandlerschaltung |
| 4 | Sensoreinheit; Signalkonditionierer |
| 5 | anwendungsspezifische Signalverarbeitungseinheit |
| 5a | erste Art |
| 5b | zweite Art |
| 5c | dritte Art |
| 6 | Tiefpass |
| 7 | Zähler-Schaltung; Mikrokontroller |
| 8 | Analog-Digital-Wandler-Schaltung |
| 9 | Signalumsetzer |
| 10 | Taktgeber |
| 11 | Regel-/Auswerteinheit |
| 12 | Steckplatz |
| 13 | Taktleitung |
| 14 | leitungsgebundene Verbindung |
| 15 | drahtlose Verbindung |
| 16 | Trennelement |
| 17 | Sende-/Empfangseinheit |
| 18 | Sendeelement |
| 19 | Parametrierungseinheit |
| 20 | Schaltelement |
| 21 | Überprüfungseinheit |
| 22 | Kommunikationsschnittstelle |
| 23 | Messumformer |
| 24 | Lichtwellenleiter |
| 25 | erste optische Sender-/Empfängereinheit |
| 26 | zweite optische Sender-/Empfängereinheit |
| 27 | Leuchtelement |
| 28 | Photovoltaikelement |
| 29 | photoempfindliches Element |
| 30 | Leitstelle |
| 31 | Behälter |
| 32 | Medium, Füllgut |
| 33 | Feldbus, Zweidrahtleitung |
| | |
| P | Prozessgröße |
| P1 | erste Prozessgröße |
| P2 | zweite Prozessgröße |
| M | Messgröße |
| M 1 | erste Messgröße |
| M2 | zweite Messgröße |
| MW | Messwert |
| D | Daten |
| E | Energiesignal |
| AS | konditioniertes Ausgangssignal |
| Al | Analoges Stromsignal |
| AU | Analoges Spannungssignal |
| DS | Digitalsignal |
| X | Einstellungsparameter |
| H | Höhe |
| F | Füllstand |

## Patentansprüche

1. Vorrichtung (1) mit zumindest einem Sensor (2) zum Erfassen wenigstens einer chemischen und/oder physikalischen Prozessgrösse (P) und mit zumindest einer modular aufgebauten Messwandlerschaltung (3), welcher zumindest eine Sensoreinheit (4), die aus der vom Sensor (2) erfassten Prozessgrösse (P) eine elektrische Messgrösse (M) ermittelt und den Sensor (2) mit der notwendigen Energie versorgt, und zumindest einer anwendungsspezifischen Signalverarbeitungseinheit (5) zur Ermittlung eines Messwerts (MW) aus der elektrischen Messgrösse (M), umfasst, wobei die Übertragung eines konditioniertes Ausgangssignals (AS) zwischen der Sensoreinheit (4) und der anwendungsspezifischen Signalverarbeitungseinheit (5) vorgesehen ist, wobei die anwendungsspezifische Signalverarbeitungseinheit (5) austauschbar ausgestaltet ist, und wobei in Abhängigkeit von einer vorgebbaren Messgenauigkeit des Messwerte (MW) zumindest eine von mehreren unterschiedlichen Arten (5a, 5b, 5c) von anwendungsspezifischen Signalverarbeitungseinheiten (5) einsetzbar ist, wobei der Signalverarbeitungseinheit (5) eine Regel-/Auswerteeinheit (11) nachgeschaltet ist, die zur Auswertung und Weiterverarbeitung des Messwerts (MW), sowie zur Steuerung und Regelung der Vorrichtung (1) vorgesehen ist,
wobei in der Messwandlerschaltung (3) zumindest ein Steckplatz (12) zum modularen Austauschen der unterschiedlichen Arten (5a, 5b, 5c) von der anwendungsspezifischen Signalverarbeitungseinheit (5) vorgesehen ist, wobei der Steckplatz geeignet ist, die unterschiedlichen Signalverarbeitungsschaltungen der ersten, zweiten und dritten Art aufzunehmen,
wobei eine erste Art (5a) der anwendungsspezifischen Signalverarbeitungseinheit (5) für Anwendungen mit einer niedrigen Anforderung an die Messgenauigkeit vorgesehen ist, wobei die erste Art (5a) der anwendungsspezifischen Signalverarbeitungseinheit (5) zumindest eine Tiefpass-Schaltung (6) umfasst,
wobei eine zweite Art (5b) der anwendungsspezifischen Signalverarbeitungseinheit (5) für Anwendungen mit einer mittleren Anforderung an die Messgenauigkeit vorgesehen ist, , wobei die zweite Art (5b) der anwendungsspezifischen Signalverarbeitungseinheit (5) zumindest eine Zähler-Schaltung (7) umfasst,
wobei eine dritte Art (5c) der anwendungsspezifischen Signalverarbeitungseinheit (5) für Anwendungen mit einer hohen Anforderung an die Messgenauigkeit vorgesehen ist, wobei die dritte Art (5c) der anwendungsspezifischen Signalverarbeitungseinheit (5) zumindest eine Analog-Digital-Wandler-Schaltung (8) umfasst.

2. Vorrichtung nach Anspruch 1, wobei die Tiefpass-Schaltung (6) einen zur elektrischen Messgröße (M) proportionalen Messwert (MW) als ein analoges Stromsignal (AI) oder eine analoges Spannungssignal (AU) bereitstellt.

3. Vorrichtung nach Anspruch 1, wobei die Zähler-Schaltung (7) und/oder die Analog-Digital-Wandler-Schaltung (8) einen zur elektrischen Messgröße (M) proportionalen Messwert (MW) als ein Digitalsignal (DS) bereitstellen.

4. Vorrichtung nach einem der Ansprüche 1 bis 3, wobei ein Schaltelement (20) an dem Steckplatz (12) vorgesehen ist.

5. Vorrichtung nach einem der Ansprüche 1 bis 4, wobei eine Überprüfungseinheit (21) vorgesehen ist, die eine Plausibilitätsüberprüfung oder Validierung der von der in den Steckplatz (12) eingebrachten ersten Art (5a), zweiten Art (5b) oder dritten Art (5c) der anwendungsspezifischen Signalverarbeitungseinheit (5) ermittelten Messwerte (MW) mit den durch die fest in der Messwandlerschaltung (3) integrierten ersten Art (5a), zweiten Art (5b) oder dritten Art (5c) der anwendungsspezifischen Signalverarbeitungseinheit (5) ermittelten Messwerte (MW) ermöglicht.

6. Vorrichtung nach Anspruch 1, wobei zumindest eine leitungsgebundene Verbindung (14) zur Übermittlung des einheitlich modulierten Ausgangssignals (AS) zwischen der Sensoreinheit (4) und der anwendungsspezifischen Signalverarbeitungseinheit (5) vorgesehen ist.

7. Vorrichtung nach Anspruch 6, wobei zumindest ein Trennelement (16) zur galvanischen Trennung der leitungsgebundenen Verbindung (14) vorgesehen ist.

8. Vorrichtung nach Anspruch 1, wobei eine drahtlose Verbindung (15) zur Übermittlung der Energie E, der Daten D und des einheitlich modulierten Ausgangssignals (AS) zwischen der einheitlichen Sensoreinheit (4) und der anwendungsspezifischen Signalverarbeitungseinheit (5) vorgesehen ist.

9. Vorrichtung nach Anspruch 1 , wobei zumindest ein Lichtwellenleiter (24) zur Übertragung der Energie E, der Daten D und des einheitlich modulierten Ausgangssignals (AS) zwischen der einheitlichen Sensoreinheit (4) und der anwendungsspezifischen Signalverarbeitungseinheit (5) vorgesehen ist.

10. Vorrichtung nach Anspruch 1, wobei eine gemeinsame Taktleitung (13) oder eine Präambel im einheitlich modulierten Ausgangssignal (AS) zur Synchronisation der anwendungsspezifischen Signalverarbeitungseinheit (5) und der Sensoreinheit (4) vorgesehen ist.

11. Vorrichtung nach Anspruch einem der vorhergehenden Ansprüche, wobei Einstellungsparameter (X) zur Versorgung der unterschiedlichen Arten von Sensoren (2) und/oder zur Erzeugung der elektrischen Messgröße (M) der unterschiedlichen Arten von Sensoren (2) in der Sensoreinheit (4) abgelegt sind.

12. Vorrichtung nach einem der vorhergehenden Ansprüche, wobei in der Sensoreinheit (4) eine Automationsroutine zur Einstellung der ermittelten Art des angeschlossenen Sensors (2) entsprechenden Einstellungsparameter (X) vorgesehen ist.

13. Vorrichtung nach einem der vorhergehenden Ansprüche, wobei eine Parametrierungseinheit (19) vorgesehen ist, die Daten (D) zumindest zur Einstellung der Einstellungsparameter (X) und/oder Daten (D) zur Einstellung der Konditionierung des einheitlich konditionierten Ausgangssignals (AS) an die Sensoreinheit (4) übermittelt.

## Claims

1. Unit (1) with at least one sensor (2) for measuring at least one chemical and/or physical process variable (P) and with at least one transformer circuit (3) with a modular structure, which comprises at least one sensor unit (4) that determines an electrical measured variable (M) from the process variable (P) recorded by the sensor (2) and provides the sensor (2) with the necessary energy, and at least one application-specific signal processing unit (5) for determining a measured value (MW) from the electrical measured variable (M), wherein the transmission of a conditioned output signal (AS) between the sensor unit (4) and the application-specific signal processing unit (5) is envisaged, wherein the application-specific signal processing unit (5) is designed as interchangeable, and wherein at least one of several types (5a, 5b, 5c) of application-specific signal processing units (5) can be used depending on a predefinable accuracy of the measured value (MW), wherein a control/evaluation unit (11) is downstream from the signal processing unit (5), said control/evaluation unit being designed to evaluate the measured value (MW) and process it further and to control and regulate the unit (1),
wherein at least one slot (12) for the modular exchange of the different types (5a, 5b, 5c) of the application-specific signal processing unit (5) is provided in the transformer circuit (3), wherein the slot is suitable to accommodate the different signal processing circuits of the first, second and third type,
wherein a first type (5a) of the application-specific signal processing unit (5) is envisaged for applications with low demands in terms of accuracy, wherein the first type (5a) of the application-specific signal processing unit (5) comprises at least a low-pass circuit (6).
wherein a second type (5b) of the application-specific signal processing unit (5) is envisaged for applications with average demands in terms of accuracy, wherein the second type (5b) of the application-specific signal processing unit (5) comprises at least a counter circuit (7).
wherein a third type (5c) of the application-specific signal processing unit (5) is envisaged for applications with high demands in terms of accuracy, wherein the third type (5c) of the application-specific signal processing unit (5) comprises at least an analog/digital converter circuit (8).

2. Unit as claimed in Claim 1, wherein the low-pass circuit (6) provides a measured value (MW), which is proportional to the electric measured variable (M), as an analog current signal (Al) or as an analog voltage signal (AU).

3. Unit as claimed in Claim 1, wherein the counter circuit (7) and/or the analog/digital converter circuit (8) provide a measured value (MW), which is proportional to the electric measured variable (M), as a digital signal (DS).

4. Unit as claimed in one of the Claims 1 to 3, wherein a switching element (20) is provided at the slot (12).

5. Unit as claimed in one of the Claims 1 to 4, wherein a checking unit (21) is provided which enables a plausibility check or validation of the measured values (MW) determined by the first type (5a), second type (5b) or third type (5c) of application-specific signal processing unit (5), which is inserted into the slot (12), using the measured values (MW) determined by the first type (5a), second type (5b) or third type (5c) of application-specific signal processing unit (5) which is permanently integrated into the transformer circuit (3).

6. Unit as claimed in Claim 1, wherein at least one wired connection (14) is provided to transmit the output signal (AS) with uniform modulation between the sensor unit (4) and the application-specific signal processing unit (5).

7. Unit as claimed in Claim 6, wherein at least one isolation unit (16) is provided for the galvanic isolation of the wired connection (14).

8. Unit as claimed in Claim 1, wherein a wireless connection (15) is provided to transmit the energy E, the data D and the output signal (AS) with uniform modulation between the uniform sensor unit (4) and the application-specific signal processing unit (5).

9. Unit as claimed in Claim 1, wherein at least one fiber optic cable (24) is provided to transmit the energy E, the data D and the output signal (AS) with uniform modulation between the uniform sensor unit (4) and the application-specific signal processing unit (5).

10. Unit as claimed in Claim 1, wherein a common clock line (13) or a preamble in the output signal (AS) with uniform modulation is provided for the synchronization of the application-specific signal processing unit (5) and the sensor unit (4).

11. Unit as claimed in one of the previous claims, wherein configuration parameters (X) are stored in the sensor unit (4) to supply the different types of sensors (2) and/or to generate the electrical measured variable (M) of the different types of sensors (2).

12. Unit as claimed in one of the previous claims, wherein the sensor unit (4) contains an automation routine for configuring configuration parameters (X) that correspond to the determined type of connected sensor (2).

13. Unit as claimed in one of the previous claims, wherein a configuration unit (19) is provided that transmits to the sensor unit (4) data (D) at least for the configuration of the configuration parameters (X) and/or data (D) for the configuration of the conditioning of the uniformly conditioned output signal (AS).

## Revendications

1. Dispositif (1) avec au moins un capteur (2) destiné à la mesure d'au moins une grandeur process (P) chimique et/ou physique et avec au moins un circuit de transducteur (3) de structure modulaire, lequel comprend au moins une unité de capteur (4), laquelle détermine à partir de la grandeur process (P) mesurée par le capteur (2) une grandeur de mesure électrique (M) et alimente le capteur (2) avec l'énergie nécessaire, et au moins une unité de traitement de signaux (5) spécifique à l'application, destinée à la détermination d'une valeur mesurée (MW) à partir de la grandeur de mesure électrique (M), la transmission d'un signal de sortie (AS) conditionné entre l'unité de capteur (4) et l'unité de traitement de signaux (5) spécifique à l'application étant prévue, l'unité de traitement de signaux (5) spécifique à l'application étant conçue de façon interchangeable, et dispositif pour lequel au moins l'un parmi plusieurs types (5a, 5b, 5c) d'unités de traitement de signaux (5) spécifiques à l'application sont utilisables en fonction d'une précision de mesure prédéfinissable de la valeur mesurée (MW), une unité de régulation et d'exploitation (11), prévue pour l'exploitation et le traitement aval de la valeur mesurée (MW), ainsi que pour la commande et la régulation du dispositif, étant couplée en aval de l'unité de traitement de signaux (5),
pour lequel est prévu dans le circuit de transducteur (3) au moins un logement (12) destiné à l'échange modulaire des différents types (5a, 5b, 5c) d'unité de traitement de signaux (5) spécifique à l'application, le logement étant approprié pour loger les différents circuits de traitement de signaux du premier, deuxième et troisième type,
pour lequel un premier type (5a) d'unité de traitement de signaux (5) spécifique à l'application est prévu pour les applications avec une exigence faible en terme de précision de mesure, le premier type (5a) d'unité de traitement de signaux (5) spécifique à l'application comportant au moins un circuit passe-bas (6).
pour lequel un deuxième type (5b) d'unité de traitement de signaux (5) spécifique à l'application est prévu pour les applications avec une exigence moyenne en terme de précision de mesure, le deuxième type (5b) d'unité de traitement de signaux (5) spécifique à l'application comportant au moins un circuit compteur (7).
pour lequel un troisième type (5c) d'unité de traitement de signaux (5) spécifique à l'application est prévu pour les applications avec une exigence élevée en terme de précision de mesure, le troisième type (5c) d'unité de traitement de signaux (5) spécifique à l'application comportant au moins un circuit convertisseur analogique-numérique (8).

2. Dispositif selon la revendication 1, pour lequel le circuit passe-bas (6) met à disposition une valeur mesurée (MW) proportionnelle à la grandeur de mesure électrique (M), sous la forme d'un signal de courant analogique (AI) ou d'un signal de tension analogique (AU).

3. Dispositif selon la revendication 1, pour lequel le circuit compteur (7) et/ou le circuit convertisseur analogique-numérique (8) mettent à disposition une valeur mesurée (MW) proportionnelle à la grandeur de mesure électrique (M), sous la forme d'un signal numérique (DS).

4. Dispositif selon la revendication 1 à 3, pour lequel est prévu un élément de commutation (20) sur le logement (12).

5. Dispositif selon la revendication 1 à 4, pour lequel est prévue une unité de contrôle (21), qui permet le contrôle de plausibilité ou la validation des valeurs mesurées (MW) déterminées par l'unité de traitement de signaux (5) spécifique à l'application de premier type (5a), deuxième type (5b) ou troisième type (5c), logée dans le logement (12) avec les valeurs mesurées (MW) déterminées par l'unité de traitement de signaux (5) spécifique à l'application de premier type (5a), deuxième type (5b) ou troisième type (5c), intégré à demeure dans le circuit de transducteur (3).

6. Dispositif selon la revendication 1, pour lequel est prévue au moins une liaison filaire (14) destinée à la transmission du signal de sortie (AS) à modulation uniforme, entre l'unité de capteur (4) et l'unité de traitement de signaux (5) spécifique à l'application.

7. Dispositif selon la revendication 6, pour lequel est prévu au moins un élément de séparation (16) pour la séparation galvanique de la liaison filaire (14).

8. Dispositif selon la revendication 1, pour lequel est prévue une liaison sans fil (15) destinée à la transmission de l'énergie E, des données D et du signal de sortie (AS) à modulation uniforme, entre l'unité de capteur (4) uniforme et l'unité de traitement de signaux (5) spécifique à l'application.

9. Dispositif selon la revendication 1, pour lequel est prévue au moins une fibre optique (24) destinée à la transmission de l'énergie E, des données D et du signal de sortie (AS) à modulation uniforme, entre l'unité de capteur (4) uniforme et l'unité de traitement de signaux (5) spécifique à l'application.

10. Dispositif selon la revendication 1, pour lequel est prévue une ligne d'impulsions (13) ou un préambule dans le signal de sortie (AS) à modulation uniforme destiné à la synchronisation de l'unité de traitement de signaux (5) spécifique à l'application et de l'unité de capteur (4).

11. Dispositif selon l'une des revendications précédentes, pour lequel sont enregistrés dans l'unité de capteur (4) des paramètres de réglage (X) destinés à l'alimentation des différents types de capteurs (2) et/ou à la génération de la grandeur de mesure électrique (M) des différents types de capteurs (2).

12. Dispositif selon l'une des revendications précédentes, pour lequel est prévue dans l'unité de capteur (4) une routine d'automatisation destinée au réglage des paramètres de réglage (X) correspondant au type déterminé de capteur (2) raccordé.

13. Dispositif selon l'une des revendications précédentes, pour lequel est prévue une unité de paramétrage (19), laquelle transmet à l'unité de capteur (4) les données (D) au moins pour le réglage des paramètres de réglage (X) et/ou les données (D) pour le réglage du conditionnement du signal dé sortie conditionné (AS) uniforme.
